# EUROPEAN PATENT APPLICATION

(11) **EP 4 783 110 A1**
(43) Date of publication of application: **29.07.2026**
(21) Application number: 24867817.9
(22) Date of filing: 14.05.2024
(51) Int. Cl.: G06T 7/00

(54) **DEFECT DETECTION METHOD, DEFECT DETECTION DEVICE, AND DEFECT DETECTION PROGRAM**

(30) Priority: 22.09.2023 JP 2023158496
(71) Applicant: FUJIFILM Corporation, Tokyo 106-8620 (JP)
(72) Inventor: IKEDA, Haruka, Tokyo 106-8620 (JP)
(74) Representative: Parker, Andrew James
(86) International application number: PCT/JP2024/017797
(87) International publication number: WO 2025/062729

(57) **Abstract**

In a defect detection method, a computer acquires a first inference result output by a first detection model in response to input of a target image to the first detection model for detecting a first type defect, acquires a second inference result output by a second detection model in response to input of the same target image to the second detection model for detecting a second type defect, and outputs, based on the first inference result and the second inference result, a detection result indicating a single defect or a series of defects within the target image.

## Description

### BACKGROUND OF THE INVENTION

### 1. Field of the Invention

The technology of the present disclosure relates to a defect detection method, a defect detection device, and a defect detection program.

### 2. Description of the Related Art

JP2021-170298A (hereinafter, Patent Literature 1) describes a "road failure detection device having a detection unit that detects a pixel region including a road failure from a captured image of a road, and an aggregation unit that calculates a failure rate of the road for each section by using an area of the detected pixel region, wherein the detection unit detects the pixel region for each type of failure including white cracks, and the aggregation unit calculates the failure rate by using a sum of areas, each area being an area of a union of pixel regions detected by the detection unit for each type of the failure".

JP2022-139796A (hereinafter, Patent Literature 2) describes "an assistance device for assisting a determination inspection for detecting, from a captured image of an object to be inspected, an abnormality occurring in the object to be inspected and determining a type of the detected abnormality, the assistance device including: a classification processing unit that calculates, from the captured image, a feature value of the abnormality occurring in the object to be inspected, classifies the calculated feature value into a plurality of classes, and selects, from the plurality of classes, one or more processing target classes for which an abnormality type is to be discriminated using a learning discrimination unit; and the learning discrimination unit including, for each abnormality type, a learning discriminator trained with a discrimination criterion using set data that combines an element image that induces the abnormality and an abnormality type assigned to the element image as a correct answer, the discrimination criterion being for discriminating whether an abnormality to be discriminated is of the abnormality type assigned as a correct answer or of an abnormality type other than the abnormality type assigned as a correct answer, wherein the learning discrimination unit discriminates an abnormality type for each of the one or more processing target classes selected by the classification processing unit, based on an individual discrimination result from the learning discriminator trained with the discrimination criterion for each abnormality type".

JP2021-110629A (hereinafter, Patent Literature 3) describes "an inspection device including a defect candidate extraction unit that extracts one or more defect candidates based on a predetermined feature value in an image captured of an inspection object, a determination region extraction unit that, for the extracted defect candidates, extracts a determination region including at least a part of the defect candidates from the image, and a determination unit that determines whether a defect is present by using a learning model constructed by machine learning for the extracted determination region".

JP2023-16347A (hereinafter, Patent Literature 4) describes "an abnormality inspection system including an acquisition unit that acquires imaging data of a component such that the same location of the component is included in different regions of a plurality of consecutive pieces of imaging data, and a determination unit that detects the presence or absence of an abnormality in the plurality of consecutive pieces of imaging data and determines that the component is abnormal in a case where an abnormality is detected in all of the plurality of pieces of imaging data".

### SUMMARY OF THE INVENTION

Defects vary in shape, dimensions, and the like depending on the mechanism of occurrence. In a case where such defects are detection targets, it is conceivable to use a dedicated detection model for each type of typical defect. However, the dedicated detection model is specialized for detecting typical defects, and there is a problem in that detection accuracy tends to be low for atypical defects that deviate from typical examples.

Patent Literatures 1 to 4 describe, in technologies for detecting defects or the like, use of a plurality of models. In particular, Patent Literature 1 describes that a failure rate is calculated by taking a union of pixel regions detected by a plurality of trained models that are trained for each type of failure, and using a sum of areas of the union. However, in Patent Literature 1, the plurality of models respectively detect a plurality of failures that are different from one another, and respective detection regions are merely combined afterward for convenience. Thus, in Patent Literature 1, the plurality of models do not perform inference together for a single aggregated failure or a series of single failures. Patent Literature 2 describes determining a type of abnormality by using a learning discriminator trained with a determination criterion for each abnormality type. However, in Patent Literature 2, in a case where a determination result of a first learning discriminator determines a first abnormality and a determination result of a second learning discriminator determines a second abnormality, confirmation by visual inspection is required. Thus, in Patent Literature 2, in a case where a plurality of models detect one abnormality, the abnormality is excluded from the determination. Patent Literature 3 describes that presence or absence of a defect is determined for a first determination region by using a first learning model constructed by machine learning of a training image including a first defect image, and that presence or absence of a defect is determined for a second determination region by using a second learning model constructed by machine learning of a training image including a second defect image smaller than the first defect image. However, in Patent Literature 3, since regions in which the plurality of models determine presence or absence of a defect are different, the plurality of learning models do not perform inference together for one defect. Patent Literature 4 describes that, in a case where a determination result of a first learning model determines that there is an abnormality in appearance, imaging data is input to a second learning model different from the first learning model, and it is determined whether the input imaging data represents a false abnormality. However, in Patent Literature 4, abnormality is determined in stages, and therefore the plurality of learning models do not perform inference together for one defect in a single stage. Thus, in Patent Literatures 1 to 4, inference results of a plurality of models are difficult to combine for one defect or the like, and therefore it is still difficult to address atypical defects or the like.

Accordingly, an object of the technology of the present disclosure is to provide a method, a device, and a program that can obtain a detection result that can also address atypical defects even when a model for detecting typical defects is used.

To achieve the above object, a defect detection method according to the technology of the present disclosure is a defect detection method in which a computer acquires a first inference result output by a first detection model in response to input of a target image to the first detection model for detecting a first type defect, acquires a second inference result output by a second detection model in response to input of the same target image to the second detection model for detecting a second type defect, and outputs, based on the first inference result and the second inference result, a detection result indicating a single defect or a series of defects within the target image.

The computer may extract at least one of a first detection region detected as the first type defect or a second detection region detected as the second type defect by using the first inference result and the second inference result, and output, as the detection result, information corresponding to an extracted result. The computer may determine whether to extract the second inference result as the second detection region detected as the second type defect, based on the first inference result, or determine whether to extract the first inference result as the first detection region detected as the first type defect, based on the second inference result. The computer may output at least one of the first detection region or the second detection region as the detection result. The computer may determine a type of a defect detected from the target image, based on at least one of the first detection region or the second detection region. The computer may output the type of the defect as the detection result. The first type defect and the second type defect may have feature values calculable from respective shapes thereof that are different from each other. One of the first type defect and the second type defect may be a circular defect, and the other of the first type defect and the second type defect may be a linear defect.

A defect detection device according to the technology of the present disclosure includes a processor configured to acquire a first inference result output by a first detection model in response to input of a target image to the first detection model for detecting a first type defect, acquire a second inference result output by a second detection model in response to input of the same target image to the second detection model for detecting a second type defect, and output, based on the first inference result and the second inference result, a detection result indicating a single defect or a series of defects within the target image.

A defect detection program according to the technology of the present disclosure causes a computer to acquire a first inference result output by a first detection model in response to input of a target image to the first detection model for detecting a first type defect, acquire a second inference result output by a second detection model in response to input of the same target image to the second detection model for detecting a second type defect, and output, based on the first inference result and the second inference result, a detection result indicating a single defect or a series of defects within the target image.

According to the technology of the present disclosure, it is possible to obtain a detection result that can also address atypical defects even when a model for detecting typical defects is used.

### BRIEF DESCRIPTION OF THE DRAWINGS

Fig. 1 is a diagram illustrating an example of a schematic configuration of a defect detection system 1 according to the present embodiment;
Fig. 2 is a diagram illustrating an example of a hardware configuration of a defect detection device 100 according to the present embodiment;
Fig. 3 is a diagram illustrating an example of a functional configuration of the defect detection device 100 according to the present embodiment;
Fig. 4 is a diagram illustrating an example of a first inference result acquired by the defect detection device 100 according to the present embodiment;
Fig. 5 is a diagram illustrating an example of a second inference result acquired by the defect detection device 100 according to the present embodiment;
Fig. 6 is a diagram illustrating an example of a defect detection flow executed by the defect detection device 100 according to the present embodiment;
Fig. 7 is a diagram illustrating an example of a detection result output by the defect detection device 100 according to the present embodiment;
Fig. 8 is a diagram schematically illustrating an effect of the defect detection device 100 according to the present embodiment;
Fig. 9 is a diagram illustrating an example of a functional configuration of the defect detection device 100 according to a modification of the present embodiment;
Fig. 10 is a diagram illustrating an example of a defect detection flow executed by the defect detection device 100 according to the modification of the present embodiment; and
Fig. 11 is a diagram illustrating an example of a detection result output by the defect detection device 100 according to the modification of the present embodiment.

### DESCRIPTION OF THE PREFERRED EMBODIMENTS

The following describes an example of an embodiment of the present disclosure with reference to the drawings. In the drawings, identical or equivalent components and portions are designated by the same reference numerals. Dimensions and ratios in the drawings are exaggerated for convenience of explanation and may differ from actual ratios.

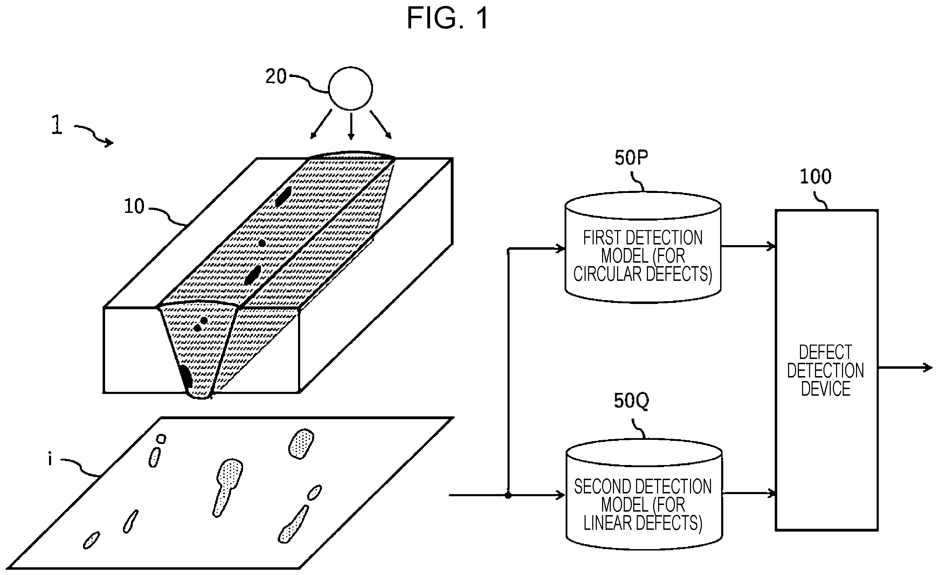

Fig. 1 is a diagram illustrating an example of a schematic configuration of a defect detection system 1 according to the present embodiment. In Fig. 1, a case where the defect detection system 1 sets, as detection targets, defects in a butt joint formed by groove welding is illustrated as an example. However, this is not intended to be limiting. The defect detection system 1 may set, as detection targets, various defects such as defects in other welded joints including T joints, cruciform joints, corner joints, backing plate joints, lap joints, or helical joints formed by fillet welding, plug welding, or slot welding, and defects in castings formed by casting.

Defects in welded joints are known as welding defects, and the welding defects include various types of defects such as blowholes (also referred to as gas holes), porosity, lack of fusion, slag inclusion, and cracks (also referred to as breaks). Similarly, defects in castings are known as casting defects, and casting defects include various types of defects such as shrinkage cavities, blowholes, cracks, misruns, cold shuts, and flow lines. These defects have unique geometric features. The defect detection system 1 may set, as detection targets, such various defects that can differ in geometric features.

The defect detection system 1 includes, as an imaging system, a target object 10 and a radiation source 20. The target object 10 is an object to be imaged. As an example, the target object 10 may be a welded structure including a butt joint formed by groove welding.

The radiation source 20 is a source that emits radiation. Any radiation such as alpha rays, beta rays, neutron rays, gamma rays, or X-rays may be used as the radiation. Hereinafter, a case where X-rays are used as the radiation will be described as an example.

In such an imaging system, X-rays are emitted from the radiation source 20 to the target object 10, and X-rays transmitted through the target object 10 are detected and visualized to perform X-ray imaging. As a result, a target image i can be obtained. The target image i is widely used as a useful image in non-destructive testing (NDT).

However, analyzing defects manually from the target image i obtained by such X-ray imaging may be undesirable because the work is complicated and labor-intensive, and, in addition, analysis results vary depending on the level of expertise. In the defect detection system 1, accordingly, the target image i is analyzed using an AI (Artificial Intelligence) model trained by machine learning to detect defects.

The defect detection system 1 includes, as an analysis system, a first detection model 50P, a second detection model 50Q, and a defect detection device 100. The first detection model 50P and the second detection model 50Q are collectively referred to as a "detection model 50" unless it is particularly necessary to distinguish between them. In Fig. 1, a case where the detection model 50 is provided outside the defect detection device 100 is illustrated as an example. Generally, an AI model trained by machine learning can have a large capacity. For this reason, it is desirable that the detection model 50 be stored outside the defect detection device 100, for example, in a cloud. However, this is not intended to be limiting. To improve security or reduce the time and cost involved in communication, at least one of the first detection model 50P or the second detection model 50Q may be included in the defect detection device 100. While a case where there are two detection models 50 is illustrated as an example in Fig. 1, the number of detection models 50 may be three or more.

The detection model 50 is a model for detecting defects. The detection model 50 may be any of various AI models such as FCN (Fully Convolutional Networks), SegNet, FPN (Feature Pyramid Networks), R-CNN (Region-Convolutional Neural Network), and RNN (Recurrent Neural Network).

The detection model 50 may perform ADR (Assisted Defect Recognition) by segmentation. Examples of segmentation include semantic segmentation, instance segmentation, and panoptic segmentation, and semantic segmentation is used here. That is, in response to input of the target image i, the detection model 50 may infer, for each pixel, whether the pixel is a "defect" or not (that is, a "non-defect").

To construct such a detection model 50, it is necessary to train using a large number of typical defect images so that features similar to the defect images used for training can be extracted from new images. However, as described above, defects vary in shape, dimensions, and the like depending on the mechanism of occurrence. As an example, blowholes and porosity have circular shapes, whereas lack of fusion, slag inclusion, and cracks have linear shapes.

JIS (Japanese Industrial Standards) defines that blowholes and porosity are classified into a first type, lack of fusion and slag inclusion are classified into a second type, and cracks are classified into a third type. However, cracks have features close to a linear shape, similarly to lack of fusion and slag inclusion. Here, cracks are classified into the same type as lack of fusion and slag inclusion.

As described above, it is difficult for one model to perform object detection on various such defects having divergent features. Accordingly, the defect detection system 1 uses at least two independent detection models 50, namely, the first detection model 50P and the second detection model 50Q. The first detection model 50P and the second detection model 50Q do not need to be completely independent models and may be models in which at least a part of an input layer or an intermediate layer overlaps.

The first detection model 50P is a model for detecting defects of a first type. The defects of the first type may be, for example, defects of a first shape, which are circular defects in this case. Accordingly, the first detection model 50P may be a model trained by machine learning using, as training data, defect images in which defects such as blowholes and porosity are captured. When the target image i is input, the first detection model 50P may infer, for each pixel, whether the pixel is a defect having features similar to the defect images used for training, that is, a circular defect. The first detection model 50P may output a first inference result in which pixels inferred as "defects" are distinguishable from pixels inferred as "non-defects". In this case, as an example, the first detection model 50P may output, as the first inference result, an image in which the pixels inferred as "defects" are marked with a first color or a first pattern.

The second detection model 50Q is a model for detecting defects of a second type different from the defects of the first type. The defects of the second type may be, for example, defects of a second shape, which are linear defects in this case. Accordingly, the second detection model 50Q may be a model trained by machine learning using, as training data, defect images in which defects such as lack of fusion, slag inclusion, and cracks are captured. When the target image i is input, the second detection model 50Q may infer, for each pixel, whether the pixel is a defect having features similar to the defect images used for training, that is, a linear defect. The second detection model 50Q may output a second inference result in which pixels inferred as "defects" are distinguishable from pixels inferred as "non-defects". In this case, as an example, the second detection model 50Q may output, as the second inference result, an image in which the pixels inferred as "defects" are marked with a second color or a second pattern.

As described above, one of a defect of the first type and a defect of the second type may be a circular defect, and the other of the defect of the first type and the defect of the second type may be a linear defect. In a general operation criterion, a defect whose ratio of a length of a major axis to a length of a minor axis is greater than 3 is regarded as a second-type defect, and a defect whose ratio of a length of a major axis to a length of a minor axis is less than or equal to 3 is regarded as a first-type defect. Accordingly, a defect of the first type and a defect of the second type may be defects whose ratios of a length of a major axis to a length of a minor axis differ from each other, such as a circular defect and a linear defect. However, this is not intended to be limiting. A defect of the first type and a defect of the second type may be any defects whose feature values calculable from shapes of the defects differ from each other.

Defects that actually occur in welded joints, castings, and the like are not necessarily clearly classifiable into first-type defects and second-type defects, and there are also defects having, for example, shapes intermediate between circular shapes and linear shapes. For example, such atypical defects that lie at a boundary between the first-type defects and the second-type defects deviate from both of the typical examples respectively used for training to construct the first detection model 50P and the second detection model 50Q. For this reason, both the first detection model 50P and the second detection model 50Q tend to have low detection accuracy, and there has been a problem in that it becomes ambiguous which of the first detection model 50P and the second detection model 50Q should be responsible for detection.

Accordingly, the defect detection device 100 acquires the first inference result output by the first detection model 50P for detecting the defects of the first type and the second inference result output by the second detection model 50Q for detecting the defects of the second type, and outputs a detection result based on both the first inference result and the second inference result. This allows typical defects to be addressed using the two detection models 50, and also allows atypical defects to be addressed by complementarily utilizing and integrating the inference results of the two detection models 50. This will be described in detail.

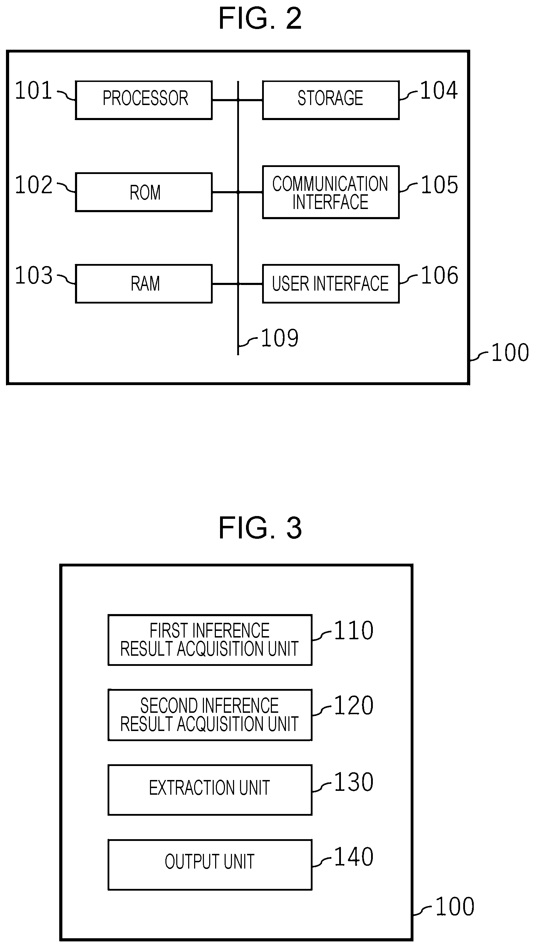

Fig. 2 is a diagram illustrating an example of a hardware configuration of the defect detection device 100 according to the present embodiment. The defect detection device 100 includes a processor 101, a ROM (Read Only Memory) 102, a RAM (Random Access Memory) 103, a storage 104, a communication interface 105, and a user interface 106. These components are communicably connected to each other via a bus 109.

The processor 101 executes various programs and controls the respective components. The ROM 102 stores various programs and various data. The RAM 103 serves as a work area and temporarily stores programs or data. The storage 104 is implemented by an HDD (Hard Disk Drive) or an SSD (Solid State Drive) and stores various programs including an operating system and various data.

The communication interface 105 is an interface for the defect detection device 100 to communicate with another device. The user interface 106 is an input/output interface for the defect detection device 100 to exchange information with a user. The user interface 106 may include, as input devices, a touch panel, a keyboard, a microphone, and the like, and may include, as output devices, a monitor, a speaker, and the like.

Fig. 3 is a diagram illustrating an example of a functional configuration of the defect detection device 100 according to the present embodiment. The defect detection device 100 according to the present embodiment includes a first inference result acquisition unit 110, a second inference result acquisition unit 120, an extraction unit 130, and an output unit 140. These functional components are implemented by the processor 101 reading a defect detection program from the ROM 102 or the storage 104 and loading the defect detection program into the RAM 103. The same applies to other functional components described below.

The first inference result acquisition unit 110 acquires a first inference result output by the first detection model 50P in response to input of the target image i to the first detection model 50P for detecting the defects of the first type.

The second inference result acquisition unit 120 acquires a second inference result output by the second detection model 50Q in response to input of the target image i to the second detection model 50Q for detecting the defects of the second type.

The extraction unit 130 extracts at least one of a first detection region detected as a defect of the first type or a second detection region detected as a defect of the second type by using the first inference result and the second inference result.

The output unit 140 outputs, based on the first inference result and the second inference result, a detection result indicating a single aggregated defect or a series of defects detected from the target image.

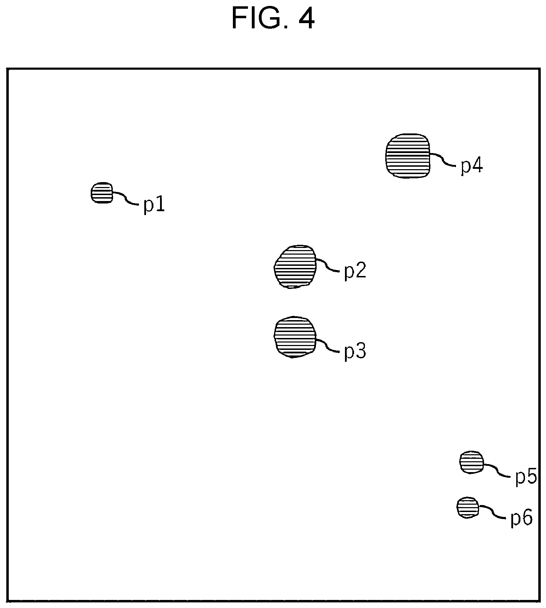

Fig. 4 is a diagram illustrating an example of the first inference result acquired by the defect detection device 100 according to the present embodiment. In FIG. 4, as an example of the first inference result, an image is illustrated in which a plurality of pixel groups p1 to p6, each of which is obtained by grouping pixels inferred as "defects" by the first detection model 50P for circular defects into a continuous group, are marked with a horizontal line pattern.

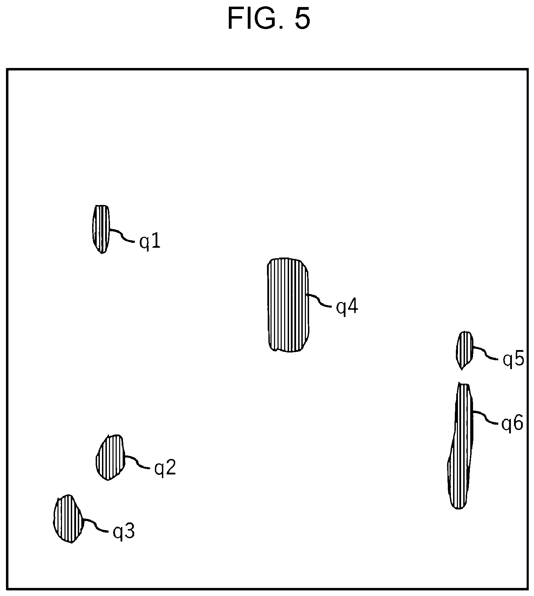

Fig. 5 is a diagram illustrating an example of the second inference result acquired by the defect detection device 100 according to the present embodiment. In FIG. 5, as an example of the second inference result, an image is illustrated in which a plurality of pixel groups q1 to q6, each of which is obtained by grouping pixels inferred as "defects" by the second detection model 50Q for linear defects into a continuous group, are marked with a horizontal line pattern.

The defect detection device 100 according to the present embodiment acquires, for example, the first inference result and the second inference result as described above and outputs a detection result based on both the first inference result and the second inference result. This will be described in detail with reference to a flow.

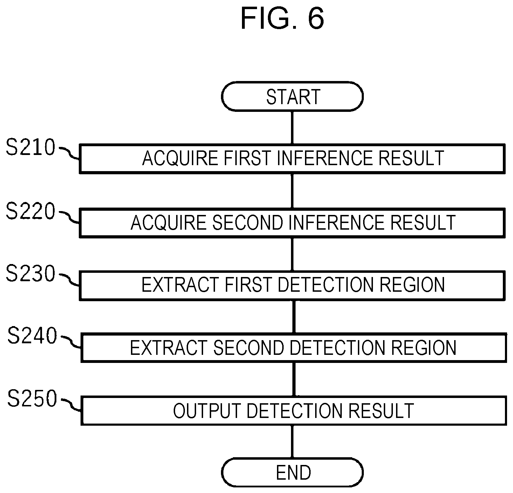

Fig. 6 is a diagram illustrating an example of a defect detection flow executed by the defect detection device 100 according to the present embodiment. This flow is executed by the processor 101 reading the defect detection program from the ROM 102 or the storage 104 and loading the defect detection program into the RAM 103. The same applies to other flows described below.

In step S210, the processor 101 serves as the first inference result acquisition unit 110 and acquires a first inference result output by the first detection model 50P in response to input of the target image i to the first detection model 50P for detecting the defects of the first type. For example, the processor 101 may acquire the target image i from the imaging system via a network and input the acquired target image i to the first detection model 50P. In response to this, the first detection model 50P may output an image as illustrated in FIG. 4. The processor 101 may acquire, for example, the image output by the first detection model 50P in this manner as the first inference result.

In step S220, the processor 101 serves as the second inference result acquisition unit 120 and acquires a second inference result output by the second detection model 50Q in response to input of the target image i to the second detection model 50Q for detecting the defects of the second type. For example, the processor 101 may input, to the second detection model 50Q, the same target image i as that input to the first detection model 50P in step S210. In response to this, the second detection model 50Q may output an image as illustrated in FIG. 5. The processor 101 may acquire, for example, the image output by the second detection model 50Q in this manner as the second inference result.

In step S230, the processor 101 serves as the extraction unit 130 and extracts a first detection region Rp detected as a defect of the first type. Here, it is assumed that the inference result by the first detection model 50P, which is trained to detect circular defects, has relatively high reliability. In this case, for example, the processor 101 may uniformly extract the first inference result acquired in step S210 as the first detection region Rp. That is, all of the pixel groups p1 to p6 may be adopted as the first detection region Rp.

In step S240, the processor 101 serves as the extraction unit 130 and extracts a second detection region Rq detected as a defect of the second type. Here, it is assumed that the inference result by the second detection model 50Q, which is trained to detect linear defects, has relatively low reliability. In this case, for example, the processor 101 may determine whether to extract the second inference result acquired in step S220 as the second detection region Rq, based on the first inference result acquired in step S210.

In this case, as an example, the processor 101 can make the determination in accordance with the following algorithms A1 to A3.
<Algorithm A1> When inference results by different detection models 50 at least partially overlap or are adjacent to each other, both are adopted as detection regions.
<Algorithm A2> For two regions in an inference result by at least one detection model 50, whose major axes form an angle not exceeding a reference angle (that is, the two regions can be regarded as being collinear), when the distance between the two regions is less than or equal to the length of the longer of the major axes of the two regions, both are adopted as detection regions.
<Algorithm A3> In a case other than Algorithm A1 or Algorithm A2, when a feature value calculated from an inference result by a specific detection model 50 is less than or equal to a reference value, the inference result is not adopted as a detection region.

As an example, the pixel group q1 is adjacent to the pixel group p1 with a distance therebetween being within a predetermined range. Accordingly, in accordance with Algorithm A1, the processor 101 determines to extract the pixel group q1 as the second detection region Rq.

The pixel groups q2 and q3 do not overlap or are not adjacent to any of the pixel groups p1 to p6. In addition, the pixel group q2 and the pixel group q3, whose major axes form an angle greater than a predetermined reference angle, cannot be regarded as being collinear. Moreover, the ratio of the length of the major axis to the length of the minor axis of each of the pixel group q2 and the pixel group q3 is less than or equal to 3. Accordingly, in accordance with Algorithm A3, the processor 101 determines not to extract the pixel groups q2 and q3 as the second detection region Rq.

The pixel group q4 at least partially overlaps the pixel group p2 and the pixel group p3. Accordingly, in accordance with Algorithm A1, the processor 101 determines to extract the pixel group q4 as the second detection region Rq.

The pixel group q5 does not overlap or is not adjacent to any of the pixel groups p1 to p6. However, the pixel group q5 and the pixel group q6, whose major axes form an angle not exceeding the predetermined reference angle, can be regarded as being collinear. Moreover, the distance between the pixel group q5 and the pixel group q6 is less than or equal to the length of the major axis of the pixel group q6. Accordingly, in accordance with Algorithm A2, the processor 101 determines to extract the pixel groups q5 and q6 as the second detection region Rq.

The "JIS Z 3104-1995 Annex 4" defines that "when flaws are collinear and the distance between the flaws is less than or equal to the length of the larger one of the flaws, a dimension measured including the distance between the flaws is regarded as a flaw length of the group of flaws", and the determination criterion of Algorithm A2 is based on this provision.

As described above, among the pixel groups q1 to q6, the pixel groups q1, q4, q5, and q6 are extracted by the processor 101 as the second detection region Rq, and the pixel groups q2 and q3 are not extracted as the second detection region Rq. For example, as described above, the processor 101 does not uniformly extract the second inference result as the second detection region Rq and may determine whether to extract the second inference result as the second detection region Rq, based on the first inference result.

In the above description, a case has been illustrated as an example in which the processor 101 uniformly extracts the first inference result as the first detection region Rp and determines, based on the first inference result, whether to extract the second inference result as the second detection region Rq. However, this is not intended to be limiting. The processor 101 may determine whether to extract the first inference result as the first detection region Rp, based on the second inference result, and may uniformly extract the second inference result as the second detection region Rq. Further, the processor 101 may determine whether to extract the first inference result as the first detection region Rp, based on the second inference result, and determine whether to extract the second inference result as the second detection region Rq, based on the first inference result. Thus, the processor 101 may determine, based on the first inference result, whether to extract the second inference result as the second detection region Rq detected as a defect of the second type, or determine, based on the second inference result, whether to extract the first inference result as the first detection region Rp detected as a defect of the first type. For example, as described above, the processor 101 can use the first inference result and the second inference result to extract at least one of the first detection region Rp detected as a defect of the first type or the second detection region Rq detected as a defect of the second type.

In step S250, the processor 101 serves as the output unit 140 and outputs, based on the first inference result and the second inference result, a detection result indicating a single aggregated defect or a series of defects detected from the target image. For example, the processor 101 may output, as the detection result, information corresponding to a result extracted in at least one of step S230 or step S240. In this case, the processor 101 may output, as the detection result, at least one of the first detection region Rp extracted in step S230 or the second detection region Rq extracted in step S240. A single aggregated defect or a series of defects refers to defects that can be regarded as one aggregated defect and, here, refers to defects that can be regarded as one linear defect or one circular defect.

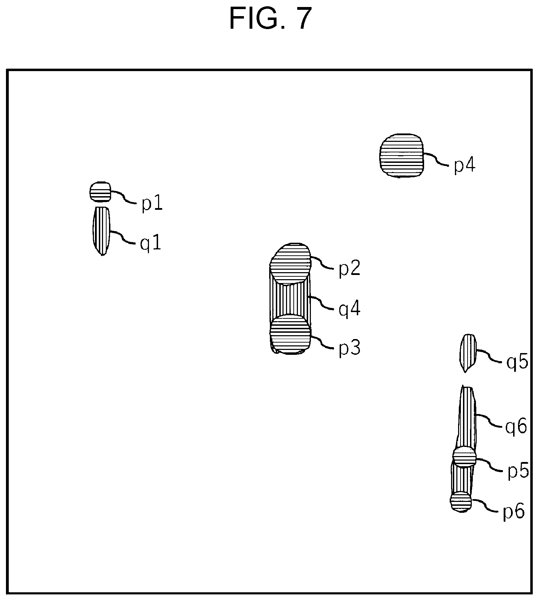

Fig. 7 is a diagram illustrating an example of a detection result output by the defect detection device 100 according to the present embodiment. In FIG. 7, a case is illustrated as an example in which the defect detection device 100 outputs both the first detection region Rp and the second detection region Rq as the detection result. Here, it should be noted that the first detection region Rp includes all of the pixel groups p1 to p6 inferred by the first detection model 50P, whereas the second detection region Rq includes only some of the pixel groups q1 to q6 inferred by the second detection model 50Q, namely, the pixel groups q1, q4, q5, and q6. That is, the second detection region Rq is not based only on the second inference result, but is based on both the first inference result and the second inference result. For example, as described above, the defect detection device 100 outputs a detection result based on both the first inference result and the second inference result.

When a detection result indicating that all pixel groups inferred as "defects" by the second detection model 50Q are linear defects is to be output, a model having a high over-detection rate cannot be used as the second detection model 50Q. Here, there is generally a trade-off between an over-detection rate and a correct detection rate. That is, when the over-detection rate is suppressed, the correct detection rate also decreases. In contrast, the defect detection device 100 can delete afterward some of the pixel groups inferred as "defects" by the second detection model 50Q without extracting the pixel groups as the second detection region Rq. Thus, a model having a high over-detection rate can be used as the second detection model 50Q. That is, in order to construct the second detection model 50Q, training can be performed such that the correct detection rate is maximized.

More specifically, for example, the pixel groups q2, q3, and q4 are thicker defects than the pixel groups q1, q5, and q6. When training on thin defects is performed so as not to excessively detect such thick defects, the second detection model 50Q does not infer either the pixel groups q2 and q3 or the pixel group q4 as "defects". However, the pixel group q4 is a region that is originally intended to be detected as a linear defect. In this case, the correct detection rate of the second detection model 50Q decreases.

Accordingly, the defect detection device 100 according to the present embodiment deletes afterward some of the pixel groups inferred as defects by the second detection model 50Q. Thus, a model having a high over-detection rate, such as a model that infers even the pixel groups q2, q3, and q4 as "defects", can be used as the second detection model 50Q, and the pixel group q4, which is a region originally intended to be detected as a linear defect, can be extracted as the second detection region Rq, whereas the pixel groups q2 and q3, which are regions not originally intended to be detected as linear defects, can be deleted afterward without being extracted as the second detection region Rq. The defect detection device 100 utilizes the inference result of the first detection model 50P for this extraction determination.

As an example, a thick linear defect may have a circular partial structure at its end portions. For this reason, the pixel groups p2 and p3 overlap the end portions of the pixel group q4. That is, a thick linear defect is inferred as a "defect" by the second detection model 50Q and end portions thereof can also be inferred as "defects" by the first detection model 50P. Further, a linear defect having a non-uniform thickness may have a circular partial structure at its intermediate portion. For this reason, the pixel group p5 overlaps the intermediate portion of the pixel group q6. That is, a linear defect having a non-uniform thickness is inferred as a "defect" by the second detection model 50Q and an intermediate portion thereof can also be inferred as a "defect" by the first detection model 50P.

In view of such characteristics, the defect detection device 100 according to the present embodiment extracts, as the second detection region Rq, the pixel group q4, which at least partially overlaps the pixel groups p2 and p3, among the pixel groups q2, q3, and q4, while deleting the pixel groups q2 and q3, which do not overlap or are not adjacent to any of the pixel groups p1 to p6, without extracting them as the second detection region Rq. For example, as described above, the defect detection device 100 can determine whether to extract an inference result by one detection model 50 as a detection region, based on an inference result by the other detection model 50.

Conventionally, a dedicated detection model is specialized for detecting typical defects, and there is a problem in that detection accuracy tends to be low for atypical defects that deviate from typical examples. In contrast, the defect detection device 100 according to the present embodiment acquires a first inference result output by the first detection model 50P for detecting defects of the first type and a second inference result output by the second detection model 50Q for detecting defects of the second type, and outputs a detection result based on both the first inference result and the second inference result. This allows typical defects to be addressed using the two detection models 50, and also allows atypical defects to be addressed by complementarily utilizing and integrating the inference results of the two detection models 50.

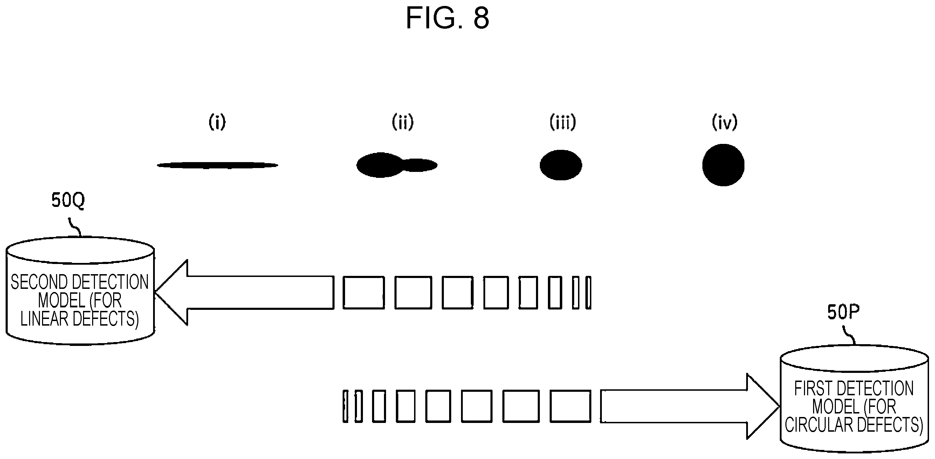

Fig. 8 is a diagram schematically illustrating an effect of the defect detection device 100 according to the present embodiment. (i) illustrates a thin linear defect, (ii) illustrates a thick linear defect, (iii) illustrates an elliptical defect labeled as a circular defect, and (iv) illustrates a true circular defect. The first detection model 50P is effective at detecting defects labeled as (iv) and becomes less effective for defects closer to defects labeled as (i). In contrast, the second detection model 50Q is effective at detecting defects labeled as (i) and becomes less effective for defects closer to defects labeled as (iv). In this case, conventionally, typical defects such as (i) and (iv) can be detected based on the inference result of the first detection model 50P or the second detection model 50Q, whereas atypical defects such as (ii) and (iii) tend to be detected with low accuracy. In contrast, the defect detection device 100 according to the present embodiment detects atypical defects such as (ii) and (iii) based on both the two inference results by the two detection models 50. Thus, the range in which detection is less effective for one detection model 50 can be complementarily covered by the other detection model 50, and therefore a detection result that also supports atypical defects can be output.

While a case has been illustrated as an example in which the defect detection device 100 outputs at least one of the first detection region Rp or the second detection region Rq as the detection result, this is not intended to be limiting. The defect detection device 100 may determine a type of defect based on at least one of the first detection region Rp or the second detection region Rq and use the determined type of defect as the detection result.

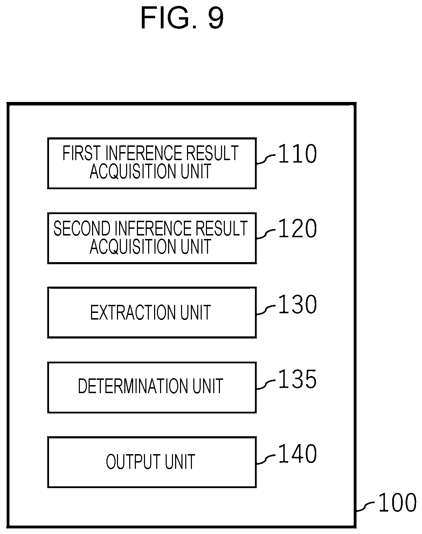

Fig. 9 is a diagram illustrating an example of a functional configuration of the defect detection device 100 according to a modification of the present embodiment. The defect detection device 100 according to the modification of the present embodiment further includes a determination unit 135. The determination unit 135 determines a type of a defect detected from the target image i, based on at least one of the first detection region Rp or the second detection region Rq. Then, the defect detection device 100 according to the modification of the present embodiment outputs the determined type of the defect as the detection result.

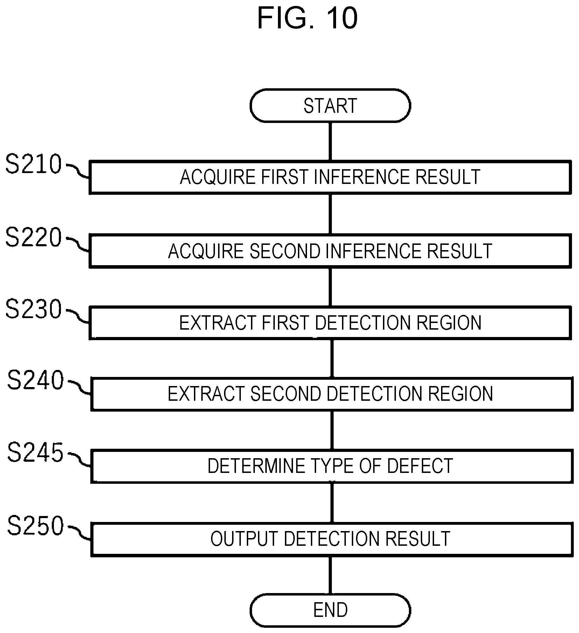

Fig. 10 is a diagram illustrating an example of a defect detection flow executed by the defect detection device 100 according to the modification of the present embodiment. This flow further includes step S245.

In step S245, the processor 101 serves as the determination unit 135 and determines a type of a defect detected from the target image i, based on at least one of the first detection region Rp or the second detection region Rq. For example, the processor 101 may determine the type of the defect, based on at least one of the first detection region Rp extracted in step S230 or the second detection region Rq extracted in step S240, in accordance with Algorithm B as follows. <Algorithm B1> In the first detection region Rp and the second detection region Rq, regions that at least partially overlap or are adjacent to each other are regarded as one region and are integrated.
<Algorithm B2> When a feature value of the region integrated by Algorithm B1 is greater than a reference value, the region is determined as a defect of the second type.
<Algorithm B3> Targets of determination in Algorithm A2 are determined as defects of the second type.
<Algorithm B4> In a case other than Algorithm B2 or B3, the first detection region Rp is determined as a defect of the first type, and the second detection region Rq is determined as a defect of the second type.

As an example, the pixel group p1 is adjacent to the pixel group q1 with a distance therebetween being within a predetermined range. Accordingly, the processor 101 integrates the pixel groups p1 and q1 as a series of defects in accordance with Algorithm B1. In addition, the ratio of the length of the major axis to the length of the minor axis of the integrated pixel groups p1 and q1 is greater than 3. Accordingly, the processor 101 determines the pixel groups p1 and q1 as a series of linear defects in accordance with Algorithm B2.

The pixel groups p2 and p3 at least partially overlap the pixel group q4. Accordingly, the processor 101 integrates the pixel groups p2, p3, and q4 as a single aggregated defect in accordance with Algorithm B1. In addition, the ratio of the length of the major axis to the length of the minor axis of the integrated pixel groups p2, p3, and q4 is greater than 3. Accordingly, the processor 101 determines the pixel groups p2, p3, and q4 as a single aggregated linear defect in accordance with Algorithm B2.

The pixel group p4 does not overlap or is not adjacent to any pixel group. In addition, the ratio of the length of the major axis to the length of the minor axis of the pixel group p4 is less than or equal to 3, and the pixel group p4 is not a target of determination in Algorithm A2. Accordingly, the processor 101 determines the pixel group p4 as a single circular defect in accordance with Algorithm B4.

The pixel groups p5 and p6 overlap the pixel group q6. Accordingly, the processor 101 integrates the pixel groups p5, p6, and q6 as a single aggregated defect. In addition, the pixel groups q5 and q6 are targets of determination in Algorithm A2. Accordingly, the processor 101 determines the pixel groups p5, p6, q5, and q6 as a series of linear defects in accordance with Algorithm B3.

In step S250, the processor 101 may output, as the detection result, for example, the types of the defects determined as described above.

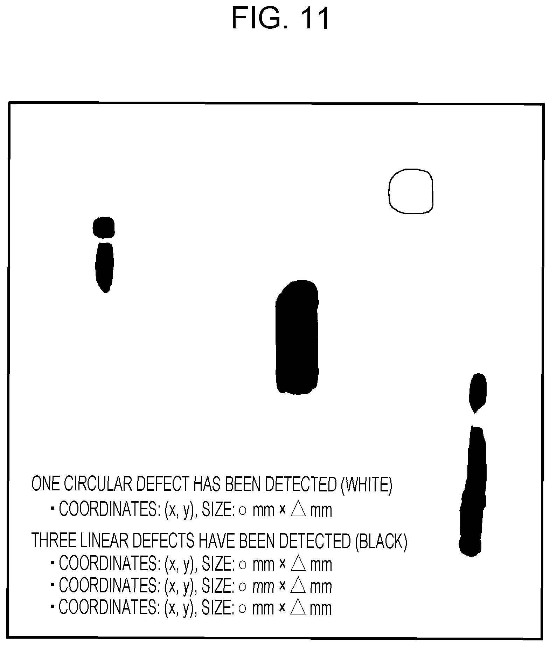

Fig. 11 is a diagram illustrating an example of a detection result output by the defect detection device 100 according to the modification of the present embodiment. In Fig. 11, the white fill represents a circular defect. In Fig. 11, black fills represent linear defects. The processor 101 can output the types of the defects, as described above, for example.

In this case, the processor 101 may output the number of detected defects for each type of defect, such as "one circular defect has been detected" or "three linear defects have been detected". Further, the processor 101 may output, for each defect, center coordinates and an estimated size, such as "Coordinates: (x, y), Size: ∘ mm × Δ mm".

Referring to Fig. 11, the pixel group p1, which is originally the first detection region Rp detected as a circular defect, is finally determined as a linear defect. Here, the pixel group p1 and the pixel group q1 merely appear to be disconnected due to insufficient X-ray dose at the time of imaging, and are highly likely to actually be a single continuous defect. Even if this were not the case, a linear defect is more likely to cause a crack in a component and is more serious. Therefore, the pixel group p1 and the pixel group q1 should be treated as a single large continuous defect, taking into consideration an influence that the defect has on a product. Accordingly, taking into consideration such an influence on the product, the defect detection device 100 finally determines the pixel group p1 as a linear defect, although the pixel group p1 is originally a region detected as a circular defect.

As described above, the defect detection device 100 according to the modification of the present embodiment determines a type of a defect detected from the target image i, based on at least one of the first detection region Rp or the second detection region Rq. Accordingly, in the defect detection device 100 according to the modification of the present embodiment, a type of defect determined based on both the first detection region Rp and the second detection region Rq can be used as a final determination result.

In the embodiment described above, the processor refers to a processor in a broad sense and includes a general-purpose processor (for example, a CPU: Central Processing Unit, or the like) and a dedicated processor (for example, a GPU: Graphics Processing Unit, an ASIC: Application Specific Integrated Circuit, an FPGA: Field Programmable Gate Array, a programmable logic device, or the like).

The operations of the processor in the above embodiment may be performed not only by a single processor but also by a plurality of processors located at physically separate positions in cooperation with each other. The order of the operations of the processor is not limited to the order described in the above embodiments and may be changed as appropriate.

The defect detection device 100 according to the above embodiment has been described as being configured by a single device as an example, but may be configured by a plurality of devices.

Processing performed by the defect detection device 100 according to the above embodiment may be processing performed by software, processing performed by hardware, or processing performed by a combination of both. Processing performed by each unit of the defect detection device 100 may be stored in a storage medium as a program for distribution.

It is to be understood that the present disclosure is not limited to the foregoing description and various modifications may be made without departing from the spirit of the present disclosure.

The disclosure of JP2023-158496 filed on September 22, 2023 is incorporated herein by reference in its entirety. All publications, patent applications, and technical standards mentioned herein are incorporated herein by reference to the same extent as if each individual publication, patent application, and technical standard were specifically and individually indicated to be incorporated by reference.

In relation to the embodiment described above, the following appendices are further disclosed.

### Appendix 1

A defect detection method in which a computer
acquires a first inference result output by a first detection model in response to input of a target image to the first detection model for detecting a first type defect,
acquires a second inference result output by a second detection model in response to input of the same target image to the second detection model for detecting a second type defect, and
outputs, based on the first inference result and the second inference result, a detection result indicating a single defect or a series of defects within the target image.

### Appendix 2

The defect detection method according to Appendix 1, wherein the computer
extracts at least one of a first detection region detected as the first type defect or a second detection region detected as the second type defect by using the first inference result and the second inference result, and
outputs, as the detection result, information corresponding to an extracted result.

### Appendix 3

The defect detection method according to Appendix 1 or 2, wherein the computer
determines whether to extract the second inference result as the second detection region detected as the second type defect, based on the first inference result, or
determines whether to extract the first inference result as the first detection region detected as the first type defect, based on the second inference result.

### Appendix 4

The defect detection method according to Appendix 2 or 3, wherein the computer
outputs at least one of the first detection region or the second detection region as the detection result.

### Appendix 5

The defect detection method according to any one of Appendices 2 to 4, wherein the computer
determines a type of a defect detected from the target image, based on at least one of the first detection region or the second detection region.

### Appendix 6

The defect detection method according to Appendix 5, wherein the computer
outputs the type of the defect as the detection result.

### Appendix 7

The defect detection method according to any one of Appendices 1 to 6, wherein the first type defect and the second type defect have feature values calculable from respective shapes thereof that are different from each other.

### Appendix 8

The defect detection method according to Appendix 7, wherein
one of the first type defect and the second type defect is a circular defect, and
the other of the first type defect and the second type defect is a linear defect.

### Appendix 9

A defect detection device including a processor configured to:
acquire a first inference result output by a first detection model in response to input of a target image to the first detection model for detecting a first type defect;
acquire a second inference result output by a second detection model in response to input of the same target image to the second detection model for detecting a second type defect; and
output, based on the first inference result and the second inference result, a detection result indicating a single defect or a series of defects within the target image.

### Appendix 10

A defect detection program for causing a computer to:
acquire a first inference result output by a first detection model in response to input of a target image to the first detection model for detecting a first type defect;
acquire a second inference result output by a second detection model in response to input of the same target image to the second detection model for detecting a second type defect; and
output, based on the first inference result and the second inference result, a detection result indicating a single defect or a series of defects within the target image.

## Claims

1. A defect detection method in which a computer
acquires a first inference result output by a first detection model in response to input of a target image to the first detection model for detecting a first type defect,
acquires a second inference result output by a second detection model in response to input of the same target image to the second detection model for detecting a second type defect, and
outputs, based on the first inference result and the second inference result, a detection result indicating a single defect or a series of defects within the target image.

2. The defect detection method according to claim 1, wherein the computer
extracts at least one of a first detection region detected as the first type defect or a second detection region detected as the second type defect by using the first inference result and the second inference result, and
outputs, as the detection result, information corresponding to an extracted result.

3. The defect detection method according to claim 1, wherein the computer
determines whether to extract the second inference result as the second detection region detected as the second type defect, based on the first inference result, or
determines whether to extract the first inference result as the first detection region detected as the first type defect, based on the second inference result.

4. The defect detection method according to claim 2 or 3, wherein the computer
outputs at least one of the first detection region or the second detection region as the detection result.

5. The defect detection method according to any one of claims 2 to 4, wherein the computer
determines a type of a defect detected from the target image, based on at least one of the first detection region or the second detection region.

6. The defect detection method according to claim 5, wherein the computer
outputs the type of the defect as the detection result.

7. The defect detection method according to any one of claims 1 to 6, wherein
the first type defect and the second type defect have feature values calculable from respective shapes thereof that are different from each other.

8. The defect detection method according to claim 7, wherein
one of the first type defect and the second type defect is a circular defect, and
the other of the first type defect and the second type defect is a linear defect.

9. A defect detection device comprising a processor configured to:
acquire a first inference result output by a first detection model in response to input of a target image to the first detection model for detecting a first type defect;
acquire a second inference result output by a second detection model in response to input of the same target image to the second detection model for detecting a second type defect; and
output, based on the first inference result and the second inference result, a detection result indicating a single defect or a series of defects within the target image.

10. A defect detection program for causing a computer to:
acquire a first inference result output by a first detection model in response to input of a target image to the first detection model for detecting a first type defect;
acquire a second inference result output by a second detection model in response to input of the same target image to the second detection model for detecting a second type defect; and
output, based on the first inference result and the second inference result, a detection result indicating a single defect or a series of defects within the target image.
